# EUROPEAN PATENT SPECIFICATION

(11) **EP 1 268 146 B1**
(45) Date of publication and mention of the grant of the patent: **12.05.2004**
(21) Application number: 00987603.8
(22) Date of filing: 21.12.2000
(51) Int. Cl.: B27B 9/00, B23D 49/11, B27B 21/08, B26B 29/06

(54) **PORTABLE CUTTING DEVICE WITH A HEIGHT ADJUSTABLE CUTTING TOOL FOR MAKING CUTS PARALLEL TO A REFERENCE PLANE**
TRAGBARE SCHNEIDVORRICHTUNG MIT HÖHENVERSTELLBAREM SCHNEIDWERKZEUG ZUM AUSFÜHREN VON SCHNITTEN PARALLEL ZU EINER REFERENZFLÄCHE
DISPOSITIF DE COUPE PORTATIF DOTE D'UN OUTIL DE COUPE A HAUTEUR REGLABLE POUR EFFECTEUR DES COUPES PARALLELEMENT A UN PLAN DE REFERENCE

(30) Priority: 28.03.2000 IT TO200049 U
(43) Date of publication of application: 02.01.2003
(73) Proprietor: Gommaplastica di Giordana R. & C. S.N.C., 10152 Torino (IT)
(72) Inventor: GIORDANA, Giorgio, I-10017 Montanaro (IT)
(74) Representative: Apra', Mario
(86) International application number: PCT/IB2000/002039
(87) International publication number: WO 2001/072486

(56) References cited:
- EP-A- 0 062 253
- GB-A- 1 427 700
- GB-A- 1 472 040
- US-A- 4 244 104
- US-A- 5 815 932

## Description

The present invention relates to a portable cutting device with a height-adjustable cutting tool for making cuts parallel to a reference plane, particularly for cutting door cases, doors and the like . Such a cutting device is known for example from GB-A-1,427,700.

This particular kind of portable cutting device can be used to make cuts parallel to a plane used as reference for the cut, even just a few millimeters away from it. In particular, this portable cutting device is used in the laying of floors in rebuilding work and can be used for increasing, where necessary, the gap underneath a door without taking it off its hinges; cutting door cases to the correct height in order to fit the new floor underneath it; and trimming wood floors against the walls, where it is necessary to create space for their expansion.

For such jobs the prior art includes motorized portable cutting devices containing a cutting disc and by a motor. During cutting, the disc must be kept parallel to the reference plane, which when cutting a door case may be e.g. the surface of the floor.

Furthermore, the portable cutting device must allow the height of the cut, that is the distance of the cutting disc from the abovementioned reference plane, to be adjusted with precision. In particular, in known cutting devices of the kind specified, the cutting disc is supported so as to be parallel to a base plate, which during cutting bears on the reference plane.

To allow adjustments to be made to the height of the cutting disc, these known portable cutting devices mostly adopt two different arrangements of adjustment means. In one known form, the cutting device has adjustment members in the form of pistons allowing the distance of the base plate from the cutting disc to be adjusted. Locking means clamp the pistons in the desired position of extension, corresponding to the desired distance of the disc from the plate. These pistons must however keep the disc and plate parallel to each other because if the base plate is not parallel to the cutting disc, the cutting tool may while cutting either "push" downwards so that the disc locks up, or tend to lift the cutting line above the predetermined height.

The main problem with this known arrangement is that in order to keep the movement and positioning of the base plate parallel to the cutting disc, the pistons have to be large and, in order to prevent flexing, the base plate must be very thick. The result is a cutting device too heavy to be comfortably portable, and it cannot also be used as an ordinary circular saw.

In another form of known cutting device of the kind specified, the bearing plate is fastened to a casing by three or more screws screwed into corresponding slotted holes. In this arrangement, however, there is no mechanical constraint to keep the disc and plate parallel, so this must be determined manually by the operator by making the adjustment, and there is much room for error.

What is more, all known cutting devices of the kind specified require the operator physically to measure the position of the base plate before adjusting the clamping means, in order to fix the correct height of the cutting disc from the base plate.

Also, in known cutting devices, replacing the cutting disc is often laborious work, it being necessary to dismantle part of the device.

The structure of the known portable cutting device as indicated above is complex and expensive.

The present invention takes note of the problems set out above and its object is to remedy them.

It is therefore a principal object of the present invention to provide a portable cutting device with a height-adjustable cutting tool for making cuts parallel to a reference plane, particularly for cutting door cases, doors and the like, that is lightweight and of a simplified structure, is easy to use and simple to maintain, besides being of relatively low cost, and that in addition always keeps the cutting tool correctly parallel to the reference plane for the cut, regardless of the ability of the operator making the height adjustment to the cutting tool.

Another object of the invention is to provide a portable cutting device as specified, with a motor, substantially like a circular saw of equal power, of which it is also able to maintain all the functional characteristics, but which always ensures that the cutting tool is correctly parallel to the reference plane for the cut, regardless of the ability of the operator making the height adjustment to the cutting tool.

In view of these objects, the present invention provides a portable cutting device with a height-adjustable cutting tool for making cuts parallel to a reference plane, particularly for cutting door cases, doors and the like, whose principal characteristic forms the subject-matter of Claim 1.

Other advantageous characteristics are indicated in the independent claims.

The abovementioned claims are to be regarded as reproduced here in their entirety.

The present invention will become clearer in the course of the following detailed description referring to the accompanying drawings, which are provided purely by way of example and in which:
- Fig. 1 is a partly exploded perspective view from above of a first example of an embodiment of the portable cutting device to which the present invention relates, in a motorized version;
- Fig. 2 is a partly exploded side view thereof;
- Fig. 3 is a partly exploded perspective view of the said device from beneath;
- Fig. 4 is an exploded perspective view of another example of an embodiment of the portable cutting device to which the present invention relates, in the hand-powered tool version;
- Fig. 5 shows a perspective view of the device of Fig. 4 assembled in the use condition; and
- Fig. 6 is a view similar to that of Fig. 5, but with the device fitted with another cutting tool.

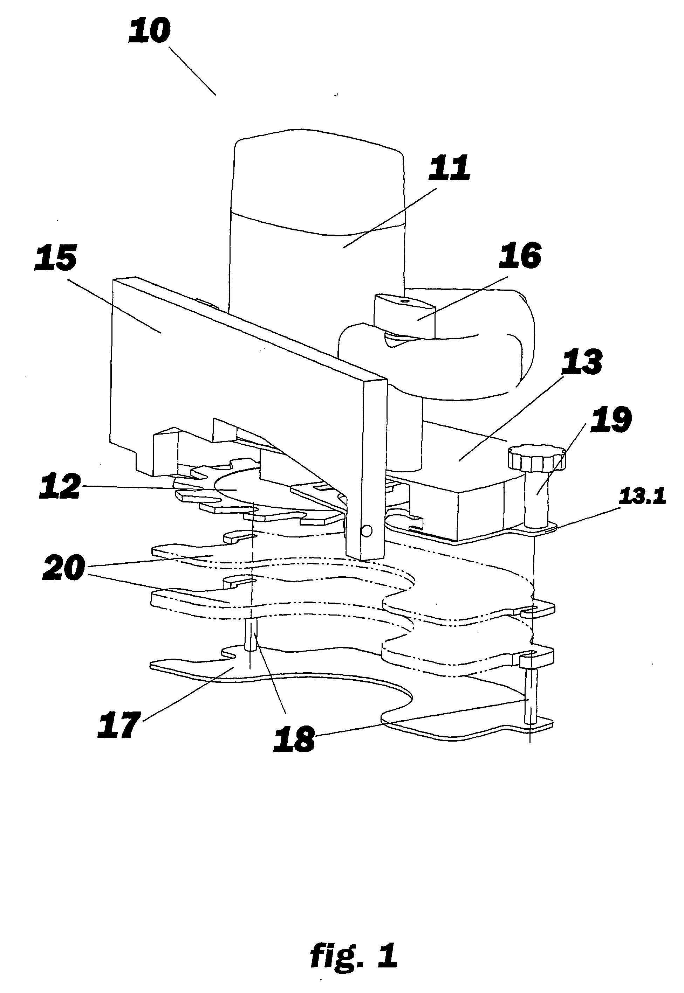

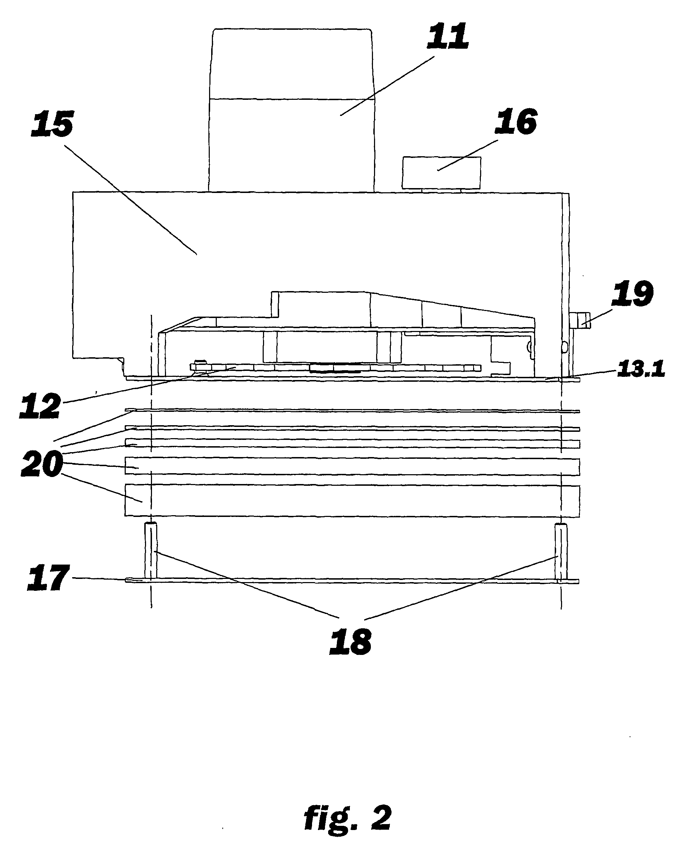

Referring first of all to the first example of an embodiment of the invention according to Figures 1 to 3, the number 10 (Fig. 1) indicates the whole of the portable cutting device to which the present invention relates, in a motorized version.

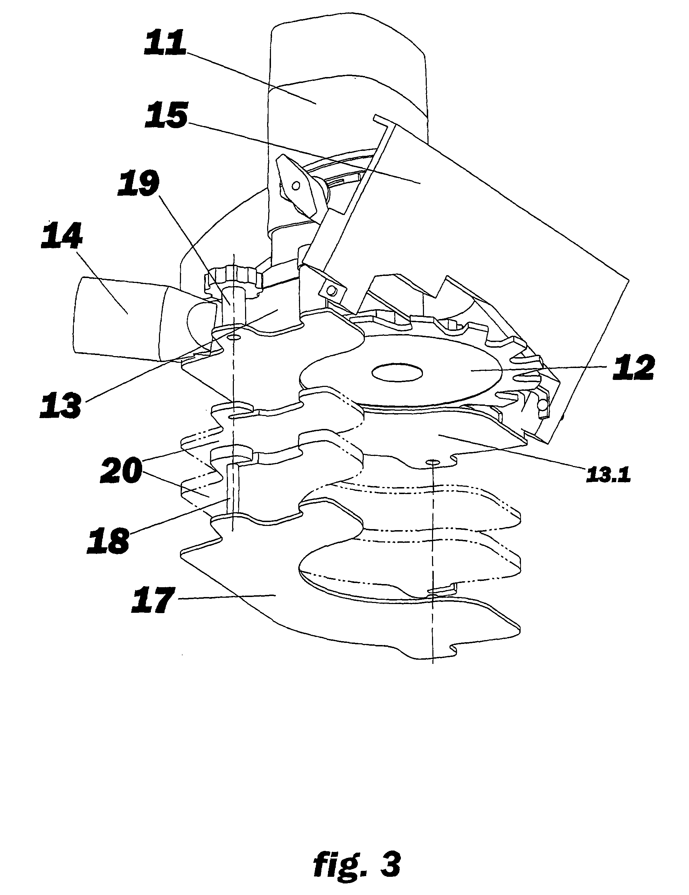

The said cutting device 10 comprises a motor body 11 that turns a cutting disc 12 which is enclosed in a protective blade guard 13 mounted firmly on the machine body and equipped with an exhaust 14 (Fig. 3) for chips and smoke.

The guard 13 has a fixed blade-covering base plate 13.1 underneath and parallel to the cutting disc 12 and mounted firmly on the machine body.

The number 15 denotes a plate for adjusting the working extension (depth of cut) of the cutting disc 12, while 16 denotes a wing-head screw for locking the plate 15 in position.

According to the present invention, in order that the operator can correctly select, within a given dimensional range, the cutting height of the cutting disc 12 relative to the reference plane of the cut (which may for example be the surface of a floor, of a wall or the like) while ensuring that the said disc and the said plane are always correctly parallel, the device 10 comprises:
- a flat plate 17, made of metal for example, that bears on the reference plane of the cut, which plate is equipped with a plurality of fixed posts 18 (in the example illustrated, two threaded posts 18 are provided) whose axes are basically perpendicular to the plate 17, these posts being mounted in peripheral areas of this plate and passing through corresponding holes in the base plate 13.1 of the blade guard 13. Wing nuts 19 screwed onto the posts 18 provide detachable fastening of the bearing plate 17 to the said base plate 13.1, in such a way that the said bearing plate 17 is parallel to the cutting disc 12; and
- at least one spacer plate of a plurality of spacer plates 20, made of PVC for example, sandwiched between the said bearing plate 17 and the said base plate 13.1 of the guard 13 in order, in combination with this bearing plate, to define the desired distance of the cutting disc 12 from the reference plane of the cut, while ensuring that the disc 12 is correctly parallel to the reference plane.

The said spacer plates 20 are preferably ordered dimensionally in series of different heights or thicknesses and are sandwiched between the base plate 13.1 and the bearing plate 17, singly or as a packet, in order to define, like gauge blocks, the distance of the cutting disc 12 from the reference plane of the cut, as freely decided by the operator, within a dimensional range useful for the purpose.

The bearing plate 17, the spacer plates 20 and the base plate 13.1 of the guard 13 are basically U-shaped to allow the cutting disc 12 to be dismantled and removed, for replacement, without having to dismantle any other part of the cutting device 10, simply by unscrewing the corresponding threaded nut or bolt holding the disc.

This U shape of the base 13.1 and bearing 17 plates and of the spacer plates 20 also ensures good ventilation during cutting, which assists the expulsion of chips and smoke through the exhaust 14.

It should be noted that the spacer plates 20, have, around their periphery, open slotted holes through which pass the clamping posts 18 and which allow removal of the spacers 20 from the device 10 by simply slackening the wing nuts 19, without having to dismantle the bearing plate 17 or other parts of the said device.

By reversing the procedure it is possible to replace and clamp spacer plates 20 in the cutting device 10.

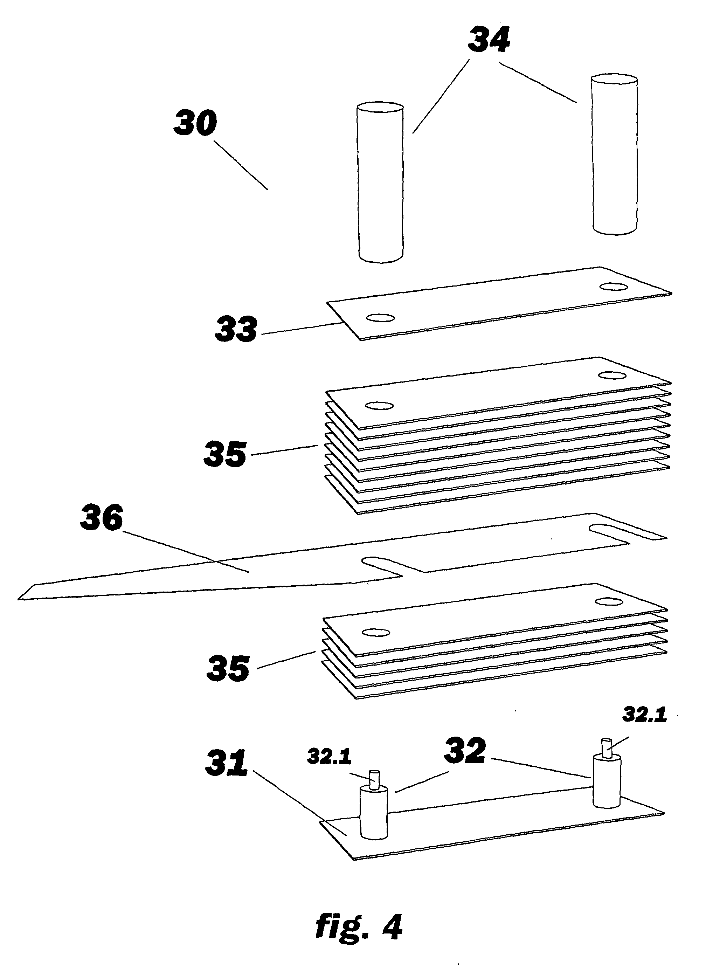

Referring now to the other example of an embodiment of the invention, illustrated in Figures 4 to 6, the number 30 denotes the whole of the cutting device according to the present invention, in a simplified hand-powered tool version.

The said device 30 comprises essentially:
- a flat plate 31, made of metal for example, that bears on the reference plane of the cut, on which stand a plurality of fixed vertical posts 32 (in the example illustrated there are two vertical posts 32 with threaded upper end parts 32.1) whose axes are basically perpendicular to the plate 31 and which are mounted in peripheral areas of this plate. The threaded ends 32.1 of the posts 32 pass through corresponding holes in an opposing base plate 33 set at a distance and of basically identical form to the bearing plate 31, while handgrips of elongate cylindrical body 34, internally drilled and threaded axially, are screwed onto the said threaded ends 32.1 of the posts 32 and provide detachable fastening of the bearing plate 31 to the said base plate 33, in a mutually parallel arrangement;
- a plurality of spacer plates 35, made of PVC for example, similar in shape to the opposing plates 31 and 33 and containing through holes through which the said posts 32 pass, in such a way as to be sandwiched and fixed between the said bearing plate 31 and the said base plate 33; and
- a cutting blade 36, interposed between two of the said spacers 35, or between a spacer 35 and either the base plate 33 or the bearing plate 31, in such a way that its cutting edge is external to the said spacers and plates and the distance between the said blade 36 and the base of the bearing plate is equal to the desired cutting height of the said blade from the reference plane of the cut. This arrangement ensures that the blade 36 and the said reference plane are correctly parallel.

It should be noted that the height of the "packet" of spacers 35 is substantially equal to the height of the non-threaded part of the posts 32.

To cut using the device 30, the user therefore simply holds its bearing plate 31 against the reference plane (such as a floor) and works as with a normal handsaw, except that its blade is securely guided parallel with and at the correct height from the said reference plane.

To alter the cutting height from the reference plane of the cut, within the dimensional range corresponding to the height of the "packet" of spacers 35, the user simply slackens the threaded handgrips 34, removes the blade 36 (which for this purpose has slotted holes with open sides for the posts 32), repositions the same blade between another pair of spacers 35, or between a spacer and either of the said plates 31 and 33, and re-screws the handgrips 34 down the posts 32.

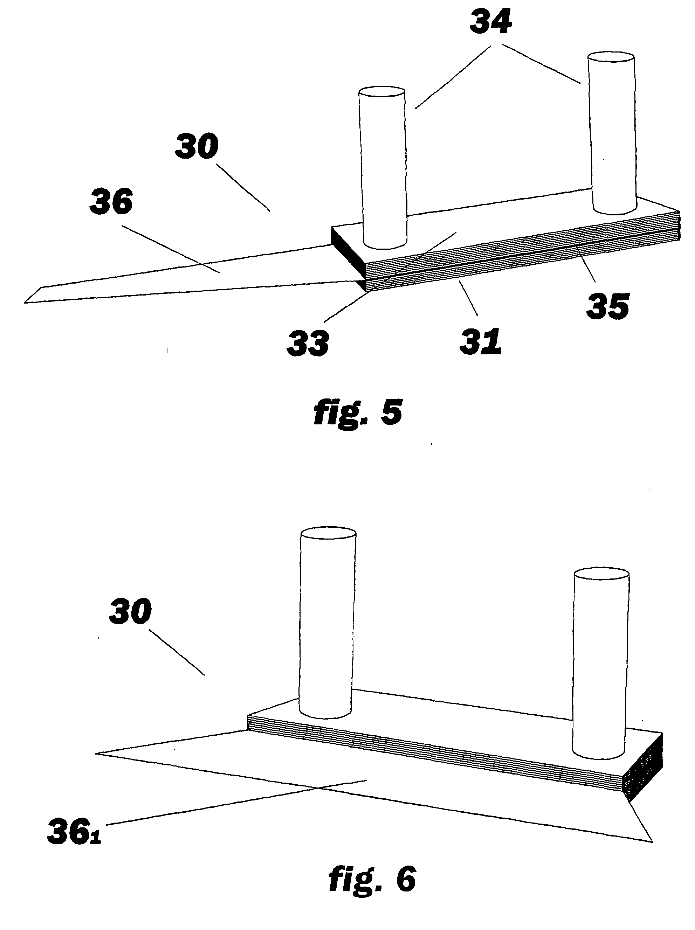

The device 30 shown in Fig. 6 is fitted with a different shape of cutting blades 36' to that of the blade 36 illustrated in Figures 4 and 5, but it is positioned and fixed in the same way.

The main advantages of the portable cutting device 10 or 30:
- The cutting device is lightweight, both in the hand-powered version 30 and in the motorized version 10, which weighs about the same as a circular saw of equal power.
- The cutting device 10 has more or less all of the functional characteristics of a normal circular saw.
- The cutting device 10 can also be used without interruption as a normal circular saw, because the bearing plate 17 with the other means (19, 18, 13.1) used for adjusting the cutting height of the cutting tool 12 do not create obstructions.
- In the device according to the invention the bearing plate is absolutely guaranteed to be'parallel to the cutting tool, irrespective of the ability of the operator making the adjustment of the cutting height.
- Moreover, the cutting height of the cutting tool is defined by spacers of predetermined height and position. The cutting height is therefore set by the operator by selecting the said spacers, as with gauge blocks, and there is no need to take measurements, which can lead to errors.
- In the motorized device 10, the particular U shape of the base plate 13.1 of the blade guard 13, of the spacer plates 20 and of the bearing plate 17 means that the cutting tool 12 can be replaced without dismantling any part of the device, simply by unscrewing the disc-clamping bolt or nut used to lock the said cutting tool. If using tools for cutting iron and steel, which are subject to heavy wear, this is a particular advantage.
- In the hand-powered device 30, the cutting height is adjusted simply by slackening the threaded handgrips, repositioning the cutting tool between the spacers and the base plate and bearing plate, and finally re-tightening the handgrips on the threaded posts.

## Claims

1. Portable cutting device with a height-adjustable cutting tool for making cuts parallel to a reference plane, particularly for cutting door cases, doors and the like, including a cutting tool (12; 36, 36') which during cutting must be kept parallel to and at a predetermined and constant distance from the said reference plane (which may for example be the surface of a floor, of a wall or the like),
**characterized in that** it comprises:
• a plate (17; 31) that bears on the reference plane of the cut, on which stand a plurality of fixed posts (18; 32, 32.1) of basically perpendicular axis and that pass through corresponding holes in an opposing base plate (13.1; 33) set at a distance from the said bearing plate, while clamping means (wing nuts 19; threaded handgrips 34) engage with the said posts to provide detachable fastening of the said bearing plate to the said base plate, in a mutually parallel arrangement and in combination with
• at least one spacer plate of a plurality of spacer plates (20; 35), sandwiched between the said bearing plate and the said base plate in order, with this bearing plate, to define the desired distance of the cutting tool from the reference plane of the cut,
in such a way as correctly to determine, as the operator decides, the cutting height of the cutting tool from the reference plane of the cut, while always ensuring that the said tool and the said plane are correctly parallel.

2. Portable cutting device according to Claim 1, that includes a motor body (11) that turns a cutting tool (12) which is enclosed in a protective guard (13) mounted firmly on the machine body and carrying a fixed base plate (13.1) underneath and parallel to the cutting tool (12), the device being **characterized in that** it comprises:
• a plate (17) that bears on the reference plane of the cut, this plate being equipped with a plurality of posts (18, optionally threaded) whose axes are basically perpendicular to the said plate (17) and which are mounted in peripheral areas of this plate and pass through corresponding holes in the said base plate (13.1) of the guard (13), while clamping means (such as wing nuts 19) engage with the said posts to provide detachable fastening of the said bearing plate (17) to the said base plate (13.1), in such a way that the said bearing plate (17) is parallel to the cutting tool (12), and
• at least one spacer plate of a plurality of spacer plates (20) sandwiched between the said bearing plate (17) and the said base plate (13.1) of the guard (13) in order, in combination with this bearing plate, to define the desired distance of the cutting tool (12) from the reference plane of the cut, while ensuring that the tool (12) and the reference plane are correctly parallel,
in such a way as correctly to determine, as the operator decides and within a predetermined dimensional range, the cutting height of the cutting tool (12) from the reference plane of the cut, while always ensuring that the said tool and the said plane are correctly parallel.

3. Portable cutting device according to Claim 2, **characterized in that** the said spacer plates (20) are ordered dimensionally in series of different heights or thicknesses and are sandwiched between the said base plate (13.1) and bearing plate (17), singly or as a packet, in order to define, like gauge blocks, the distance of the cutting tool (12) from the reference plane of the cut, as freely decided by the operator, within a predetermined dimensional range.

4. Portable cutting device according to Claim 2 or 3, **characterized in that** the said bearing plate (17), the said spacer plates (20) and the said base plate (13.1) of the guard (13) are basically U-shaped to allow the cutting tool (12) to be dismantled and removed, without having to dismantle any other part of the cutting device, simply by unscrewing the corresponding threaded nut or bolt holding the tool.

5. Portable cutting device according to Claim 4, in which this U shape of the said base (13.1) and bearing (17) plates and of the said spacer plates (20) ensures good ventilation during cutting, which assists the expulsion of chips and smoke through an exhaust (14) fitted to the cutting device.

6. Portable cutting device according to any of the preceding claims, **characterized in that** the said spacer plates (20) have, around their periphery, open slotted holes through which pass the said clamping posts (18) and which allow removal of the said spacer plates (20) by simply slackening the clamping means of the said posts (wing nuts 19), without having to dismantle the bearing plate (17) or other parts of the said device.

7. Portable cutting device according to Claim 1, produced in the form of a hand-powered tool, **characterized in that** it comprises:
• a plate (31) that bears on the reference plane of the cut, on which plate stand a plurality of fixed vertical posts (32), each having a threaded upper end part (32.1) and passing through a corresponding hole in an opposing base plate (33) set at a distance from the said bearing plate (31), while internally drilled and threaded handgrips (34) are screwed onto the said threaded ends (32.1) of the posts (32) and provide detachable fastening of the said bearing plate (31) to the said base plate (33), in a mutually parallel arrangement and in combination with
• a plurality of spacer plates (35) with through holes through which the said posts (32) pass, the said spacer plates being sandwiched and fixed between the said bearing plate (31) and the said base plate (33);
• a cutting tool (36, 36') interposed between two of the said spacers (35), or between a spacer (35) and either the said base plate (33) or the said bearing plate (31), in such a way that its cutting edge is external to the said spacers and plates and the distance between the said tool (36, 36') and the base of the said bearing plate is equal to the desired cutting height of the said tool from the reference plane of the cut, this arrangement ensuring that the said tool and the said reference plane are correctly parallel.

8. Cutting device according to Claim 7, **characterized in that** the height of the spacers (35) sandwiched and fixed between the said bearing plate (31) and the said base plate (33) is substantially equal to the height of the non-threaded part of the said posts (32).

## Patentansprüche

1. Tragbare Schneidvorrichtung mit einem höhenverstellbaren Schneidwerkzeug zum Ausführen eines Schnitts parallel zu einer Bezugsebene, insbesondere zum Schneiden von Türstöcken, Türen und dergleichen, umfassend ein Schneidwerkzeug (12; 36, 36'), welches beim Schneiden parallel und in einem vorbestimmten und gleichbleibenden Abstand zu der - beispielsweise eine Boden- oder Wandfläche oder dergleichen darstellenden - Bezugsebene gehalten werden muss,
**dadurch gekennzeichnet, dass** sie folgendes umfasst:
• eine Platte (17; 31), die sich auf der Bezugsebene des Schnitts abstützt und auf der mehrere im Wesentlichen senkrecht dazu aufstehende Pfosten (18; 32, 32.1) befestigt sind, welche durch entsprechende Löcher in einer gegenüberliegenden, im Abstand zur Stützplatte angeordneten Grundplatte (13.1; 33) hindurchragen, wobei Klemmmittel (Flügelmuttern 19; mit Gewinde versehene Griffe 34) mit den Pfosten in Eingriff kommen, um die Stützplatte parallel zur Grundplatte lösbar an dieser zu befestigen, in Verbindung mit
• mindestens einer aus mehreren Abstandsplatten (20; 35) gewählten Abstandsplatte, welche zwischen der Stützplatte und der Grundplatte angeordnet ist, um zusammen mit der Stützplatte den gewünschten Abstand des Schneidwerkzeugs zur Bezugsebene des Schnittes zu definieren, auf eine Weise, die es ermöglicht, die vom Bediener gewählte Schnitthöhe des Schneidwerkzeugs in Bezug auf die Bezugsebene präzise zu bestimmen und dabei immer sicherzustellen, dass Werkzeug und Ebene genau parallel verlaufen.

2. Tragbare Schneidvorrichtung nach Anspruch 1, umfassend einen Motorkörper (11), der ein Schneidwerkzeug (12) zum Drehen bringt, das von einem fest am Maschinenkörper angebrachten Schutzgehäuse (13) umschlossen ist, welches unterhalb des Schneidwerkzeugs (12) und parallel zu diesem eine feststehende Grundplatte (13.1) trägt, wobei die Vorrichtung **dadurch gekennzeichnet ist, dass** sie folgendes umfasst:
• eine Platte (17), die sich auf der Bezugsebene des Schnitts abstützt und mit mehreren Pfosten (18, die mit einem Gewinde versehen sein können) ausgestattet ist, deren Achsen im Wesentlichen senkrecht zur Platte (17) stehen und die in Umfangsbereichen dieser Platte angebracht sind und durch entsprechende Löcher in der Grundplatte (13.1) des Gehäuses (13) hindurchragen, wobei Klemmmittel (beispielsweise Flügelmuttern 19) mit den Pfosten in Eingriff kommen, um die Stützplatte (17) parallel zur Grundplatte (13.1) derart lösbar an dieser zu befestigen, dass die Stützplatte (17) parallel zu dem Schneidwerkzeug (12) verläuft, und
• mindestens einer aus mehreren Abstandsplatten (20) gewählten Abstandsplatte, welche zwischen der Stützplatte (17) und der Grundplatte (13.1) des Gehäuses (13) angeordnet ist, um zusammen mit der Stützplatte den gewünschten Abstand des Schneidwerkzeugs (12) zur Bezugsebene des Schnittes zu definieren und dabei sicherzustellen, dass das Werkzeug (12) und die Bezugsebene genau parallel verlaufen,
auf eine Weise, die es ermöglicht, die vom Bediener innerhalb eines vorgegebenen Abmessungsbereichs gewählte Schnitthöhe des Schneidwerkzeugs (12) in Bezug auf die Bezugsebene des Schnitts präzise zu bestimmen und dabei immer sicherzustellen, dass Werkzeug und Ebene genau parallel verlaufen.

3. Tragbare Schneidvorrichtung nach Anspruch 2, **dadurch gekennzeichnet, dass** die Abstandsplatten (20) von ihren Abmessungen her in Serien verschiedener Höhe oder Stärke angeordnet und entweder einzeln oder als Stapel zwischen der Grundplatte (13.1) und der Stützplatte (17) eingesetzt sind, um so in der Weise eines Endmaßes den innerhalb eines vorgegebenen Abmessungsbereichs vom Bediener frei gewählten Abstand des Schneidwerkzeugs (12) zur Bezugsebene des Schnitts zu definieren.

4. Tragbare Schneidvorrichtung nach Anspruch 2 oder 3, **dadurch gekennzeichnet, dass** die Stützplatte (17), die Abstandsplatten (20) und die Grundplatte (13.1) des Gehäuses (13) im Wesentlichen U-förmig ausgebildet sind, so dass das Schneidwerkzeug (12), ohne dabei ein weiteres Teil der Schneidvorrichtung auseinandernehmen zu müssen, durch einfaches Lösen der entsprechenden, das Werkzeug haltenden Gewindemutter oder -bolzens zerlegt und entfernt werden kann.

5. Tragbare Schneidvorrichtung nach Anspruch 4, wobei diese U-Form der Grund- (13.1) und Stütz(17) platten sowie der Abstandsplatten (20) beim Schneiden eine gute Luftzirkulation sicherstellt, wodurch das Auswerfen der Späne und der Rauchausstoß durch eine an der Schneidvorrichtung angebrachte Auslassöffnung (14) gefördert wird.

6. Tragbare Schneidvorrichtung nach einem der vorhergehenden Ansprüche, **dadurch gekennzeichnet, dass** die Abstandsplatten (20) auf ihrem Umfang offene geschlitzte Löcher aufweisen, durch welche die Klemmpfosten (18) hindurchragen und über die die Abstandsplatten (20), ohne dabei die Stützplatte (17) oder weitere Teile der Schneidvorrichtung auseinandernehmen zu müssen, durch einfaches Lösen der Klemmmittel der Pfosten (Flügelmuttern 19) entnommen werden können.

7. Tragbare Schneidvorrichtung nach Anspruch 1, hergestellt nach Art eines handbetriebenen Werkzeugs, **dadurch gekennzeichnet, dass** sie folgendes umfasst:
• eine Platte (31), die sich auf der Bezugsebene des Schnitts abstützt und auf der mehrere senkrecht stehende Pfosten (32) befestigt sind, wobei jeder in seinem oberen Endbereich (32.1) mit einem Gewinde versehen ist und durch ein entsprechendes Loch in einer gegenüberliegenden, im Abstand zur Stützplatte (31) gehaltenen Grundplatte (33) hindurchragen, wobei in ihrem Inneren mit einer Bohrung und einem Gewinde versehene Griffe (34) auf die mit einem Gewinde versehenen Enden (32.1) der Pfosten (32) aufgeschraubt sind und die Stützplatte (31) parallel zur Grundplatte (33) lösbar an dieser befestigen, in Verbindung mit
• mehreren Abstandsplatten (35) mit Durchgangslöchern, durch welche die Pfosten (32) hindurchragen, wobei die Abstandsplatten zwischen der Stützplatte (31) und der Grundplatte (33) eingesetzt und befestigt sind;
• einem derart zwischen zwei dieser Abstandshalter (35) oder zwischen einem Abstandshalter (35) und entweder der Grundplatte (33) oder der Stützplatte (31) eingesetztes Schneidwerkzeug (36, 36'), dass seine Schneide außerhalb der Abstandshalter und Platten liegt und der Abstand zwischen dem Werkzeug (36, 36') und der Grundfläche der Stützplatte der gewünschten Schneidhöhe des Werkzeugs in Bezug auf die Bezugsebene des Schnitts entspricht, wobei diese Anordnung sicherstellt, dass das Werkzeug und die Bezugsebene genau parallel sind.

8. Schneidvorrichtung nach Anspruch 7, **dadurch gekennzeichnet, dass** die Höhe der zwischen der Stützplatte (31) und der Grundplatte (33) angeordneten Abstandshalter (35) im Wesentlichen der Höhe des Teils der Pfosten (32) entspricht, der nicht mit einem Gewinde versehen ist.

## Revendications

1. Dispositif de découpe portable avec un outil de découpe réglable en hauteur pour réaliser des découpes parallèles à un plan de référence, notamment pour découper le cadre d'une porte, des portes et similaire, comprenant un outil de découpe (12 ; 36, 36') qui, pendant le découpage, doit être maintenu parallèle audit plan de référence et à une distance prédéterminée et constante de celui-ci (ce dernier pouvant être par exemple la surface du sol, d'un mur ou similaire),
**caractérisé en ce qu'**il comprend :
• une plaque (17 ; 31) qui est en appui sur le plan de référence de la découpe et sur laquelle se dresse une pluralité de montants fixes (18 ; 32, 32.1) dont l'axe est sensiblement perpendiculaire et qui passent par des trous correspondants ménagés dans une plaque de base (13.1 ; 33) située en regard à quelque distance de la plaque support, des moyens de serrage (écrous à oreilles 19 ; poignées filetées 34) se mettant en prise avec lesdits montants pour assujettir de manière amovible ladite plaque support à ladite plaque de base selon un agencement parallèle et, combinée avec elle,
• au moins une plaque d'entretoise parmi une pluralité de plaques d'entretoise (20 ; 35) prise en sandwich entre ladite plaque support et ladite plaque de base afin de définir, avec cette plaque support, l'écartement souhaité entre l'outil de découpe et le plan de référence de la découpe, de manière à déterminer avec exactitude la hauteur de coupe de l'outil de découpe par rapport au plan de référence de la découpe telle que l'a choisie l'opérateur tout en assurant à tout moment le parallélisme entre ledit outil et ledit plan.

2. Dispositif de découpe portable selon la revendication 1, comprenant un corps de moteur (11) faisant tourner un outil de découpe (12) logé dans un boîtier de protection (13) qui est monté solidaire du corps de la machine et comporte, en dessous de l'outil de découpe (12) et parallèle à celui-ci, une plaque de base fixe (13.1), le dispositif étant **caractérisé en ce qu'**il comprend :
• une plaque (17) qui est en appui sur le plan de référence de la découpe, ladite plaque étant équipée d'une pluralité de montants (18, qui peuvent être filetés) dont les axes sont sensiblement perpendiculaires à ladite plaque (17) et qui sont montés dans des zones périphériques de ladite plaque et passent par des trous correspondants dans ladite plaque de base (13.1) du boîtier (13), des moyens de serrage (des écrous à oreilles 19 par exemple) se mettant en prise avec lesdits montants pour assujettir de manière amovible ladite plaque support (17) à ladite plaque de base (13.1) de telle sorte que ladite plaque support (17) est parallèle à l'outil de découpe (12) et
• au moins une plaque d'entretoise parmi une pluralité de plaques d'entretoise (20) prise en sandwich entre ladite plaque support (17) et ladite plaque de base (13.1) du boîtier (13) afin de définir, avec cette plaque support, l'écartement souhaité entre l'outil de découpe (12) et le plan de référence de la découpe, tout en assurant à tout moment le parallélisme entre l'outil (12) et le plan de référence,
de manière à déterminer avec exactitude la hauteur de coupe de l'outil de découpe (12) par rapport au plan de référence de la découpe telle que l'a choisie l'opérateur dans le cadre de dimensions prédéterminées tout en assurant à tout moment le parallélisme entre ledit outil et ledit plan.

3. Dispositif de découpe portable selon la revendication 2, **caractérisé en ce que** lesdites plaques d'entretoise (20) sont regroupées en fonction de leurs dimensions en séries de différentes hauteurs ou épaisseurs et sont prises en sandwich, une à une ou en paquet, entre ladite plaque de base (13.1) et la plaque support (17) afin de définir, à la manière de cale-étalons, l'écartement entre l'outil de découpe (12) et le plan de référence de la découpe librement choisi par l'opérateur dans le cadre de dimensions prédéterminées.

4. Dispositif de découpe portable selon la revendication 2 ou 3, **caractérisé en ce que** ladite plaque support (17), lesdites plaques d'entretoise (20) et ladite plaque de base (13.1) du boîtier (13) sont sensiblement conformées en U ce qui permet de démonter et de retirer l'outil de découpe (12) en dévissant simplement l'écrou ou le boulon fileté correspondant qui maintient l'outil en place sans avoir à démonter d'autre pièce du dispositif de découpe.

5. Dispositif de découpe portable selon la revendication 4, **caractérisé en ce que** la forme en U desdites plaques de base (13.1) et de support (17) ainsi que desdites plaques d'entretoise (20) assure une bonne ventilation pendant le découpage, ce qui facilite l'expulsion des copeaux et l'évacuation de la fumée par une sortie (14) ménagée sur le dispositif de découpe.

6. Dispositif de découpe portable selon l'une quelconque des revendications précédentes, **caractérisé en ce que** lesdites plaques d'entretoise (20) comportent, sur leur périphérie, des trous ouverts en forme de fente au travers desquels sont passés lesdits montants (18) de serrage et qui permettent de retirer lesdites plaques d'entretoise (20) en desserrant simplement les moyens de serrage desdits montants (écrous à papillons 19) sans avoir à démonter la plaque support (17) ou d'autres pièces dudit dispositif.

7. Dispositif de découpe portable selon la revendication 1, réalisé sous forme d'outil à main, **caractérisé en ce qu'**il comprend :
• une plaque (31) qui est en appui sur le plan de référence de la découpe et sur laquelle se dresse une pluralité de montants verticaux fixes (32), chacun d'eux ayant une partie d'extrémité supérieure filetée (32.1) et passant par un trou correspondant ménagé dans une plaque de base (33) située en regard à quelque distance de ladite plaque support (31), des poignées (34) forées et taraudées étant vissées sur lesdites extrémités filetées (32.1) des montants (32) et assujettissant de manière amovible ladite plaque support (31) à ladite plaque de base (33) selon un agencement parallèle et, combinée avec celle-ci,
• une pluralité de plaques d'entretoise (35) munies de trous traversants par lesquels sont passés lesdits montants (32), lesdites plaques d'entretoise étant prises en sandwich et fixées entre ladite plaque support (31) et ladite plaque de base (33) ;
• un outil de découpe (36, 36') interposé entre deux desdites entretoises (35) ou entre une entretoise (35) et soit ladite plaque de base (33) soit ladite plaque support (31) de manière que son tranchant est situé à l'extérieur desdites entretoises et plaques et que l'écartement entre ledit outil (36, 36') et la base de ladite plaque support est égal à la hauteur de coupe souhaitée dudit outil par rapport au plan de référence de la découpe, cet agencement assurant le parallélisme entre ledit outil et ledit plan de référence.

8. Dispositif de découpe selon la revendication 7, **caractérisé en ce que** la hauteur des entretoises (35) prises en sandwich et fixées entre ladite plaque support (31) et ladite plaque de base (33) est sensiblement égale à la hauteur de la partie non filetée desdits montants (32).
